# EUROPEAN PATENT SPECIFICATION

(11) **EP 3 450 010 B1**
(45) Date of publication and mention of the grant of the patent: **05.08.2020**
(21) Application number: 17020586.8
(22) Date of filing: 20.12.2017
(51) Int. Cl.: B01J 13/04, C09K 5/06, C08K 3/28, F28D 20/02

(54) **POTASSIUM NITRATE MICROENCAPSULATION PROCESS IN A NANOSTRUCTURED INORGANIC ZINC OXIDE SHELL WITH APPLICATION IN THERMAL ENERGY STORAGE**
KALIUMNITRATMIKROEINKAPSELUNGSVERFAHREN IN EINER NANOSTRUKTURIERTEN ANORGANISCHEN ZINKOXIDHÜLLE MIT ANWENDUNG IN WÄRMEENERGIESPEICHERUNG
UN PROCESSUS DE MICROENCAPSULATION DE NITRATE DE POTASSIUM DANS UNE ENVELOPPE D'OXYDE DE ZINC INORGANIQUE NANOSTRUCTURÉE AVEC APPLICATION DANS LE STOCKAGE D'ÉNERGIE THERMIQUE

(30) Priority: 30.08.2017 RO 604
(43) Date of publication of application: 06.03.2019
(73) Proprietor: National Research-Development Institute for Non-ferrous and Rare Metals (IMNR), 077145 Pantelimon (RO)
(72) Inventor: PITICESCU, Radu Robert, Bucaresti, CP 011137 (RO); ROMERO-SANCHEZ, Maria Dolores, Elda, Alicante (ES); MOTOC, Adrian Mihail, Bucaresti, CP 062083 (RO)

(56) References cited:
- EP-A1- 2 119 498
- US-B2- 9 650 556
- DATABASE WPI Week 201569 29 July 2015 (2015-07-29) Thomson Scientific, London, GB; AN 2015-568056 XP002781134, & CN 104 803 408 A (WU X) 29 July 2015 (2015-07-29)

## Description

The patent refers to an inorganic phase change materials based on potassium nitrate micro encapsulation process in a nanostructured inorganic zinc oxide shell with application in thermal energy storage in the temperature range 300-500 °C. It is well known the fact that thermal energy storage systems (TES) are classified into three groups according to heat storage mechanism: ***sensible heat storage*** that is based on storing thermal energy by heating or cooling a liquid or solid storage medium (e.g. water, sand, molten salts, rocks), with water being the cheapest option; ii) ***latent heat storage using phase change materials (PCMs)*** (e.g. from a solid state into a liquid state); and iii) ***thermo-chemical storage (TCS)*** using chemical reactions to store and release thermal energy. TES became very important in residual heat recovery from industrial processes and in the renewable energies field using concentrated solar energy, so that the solar heat could be stored for electricity production when solar light is not available.

With all the progress made, thermal energy storage systems face various problems such as: lack of thermal stability of energy storage materials and / or corrosion problems when working at high temperatures where storage takes place in the temperature range 120 - 600 °C (1, 2). In particular for solar energy storage systems at solar plants, the phase change temperature (melting temperature) must be at least 300 °C in order to store the thermal energy. Various inorganic materials (metals, salts, eutectics) have been identified as potential candidate as phase-change materials having a melting point in the range of 300-500°C (3-6), including sodium nitrate (NaNO₃) and potassium nitrate KNO₃) are already being used in storage tanks at solar plants.

However, the main limitation in the use of phase change materials for thermal energy storage represents their incorporation into appropriate systems or support materials that require container encapsulation in order to avoid compatibility or reactivity problems with the storage equipment (corrosion of metallic tanks) and the loss of their effectiveness. In order to solve these problems, there were proposed various macro-encapsulation (capsule sizes> 1 mm) and micro-encapsulation (µm particle sizes) methods of low temperatures phase-change materials (organic and inorganic materials) mainly using polymeric coatings (7-12). According to our knowledge, there are only few papers in the literature where, macro-encapsulation of inorganic salts as phase change materials at temperatures above 300 °C was used. Therefore, metallic zinc (13) zinc nitrate-NaNO₃, magnesium chloride - MgCl₂ and eutectics mixtures with meling point bigger than 300 °C were encapsulated using cylindrical containers (dimensions ranging from mm to cm) made from stainless steel or nickel based materials. In (14) the nitrate molten salts were sealed in metal tubes for their permanent isolation. In (15) the encapsulation of molten salts such as sodium or potassium nitrate in the form of pellets of average size 27 nm were coated with a flexible polymer followed by a metal coating (Ni, Cu, Zn, Zn-Fe alloys, etc.) by chemical or electrolytic processes.

The main problems related to the use of proposed micro-encapsulation methods for phase change materials for energy storage at high temperatures are related to: thermal and corrosion stability of the microcapsule shell at temperatures above 300 °C; the control of the micro-encapsulation process in order to ensure compatibility between the phase-change material and micro-encapsulating material; maintaining a good thermal conductivity of the shell so that the temperature and enthalpy of the phase change material is not changed.
In (16) a method to microencapsulate high temperature PCMs by coating them with a colloidal inorganic binder, film former based on naturally derived organic polymers and an inorganic filler such as clays, silica or micronized stainless steel. This layer may be applied via the use of solvents and surfactants. A heating process at temperatures higher than 400°C removes the film former, finally obtaining the PCM encapsulated into a coating of inorganic filler.

The present invention eliminates the above-mentioned disadvantages by using a nanostructured zinc oxide based shell obtained in-situ without any use of organic polymers under solvo-thermal conditions, at temperatures below 250 °C, on the dispersed particles of phase change material based on potassium nitrate, followed by drying and granulation of the suspension obtained by spraying in hot air jet (spray drying), without any in this way there are obtained microcapsules of 25-50 µm and a gravimetric ratio between ZnO shell and KNO₃ microencapsulated material comprised between 1: 1 and 5: 1, preferably 1: 1 to 2: 1, in order to ensure the formation of a continuous shell and a good thermal conductivity.

Table 1 presents the phase composition of the microencapsulated potassium nitrate in a nanostructured zinc oxide shell with a ZnO: KNO₃, 1: 1 gravimetric ratio.

Table 2 presents the melting and solidification temperatures and melting and solidifying enthalpies of KNO₃ initially and microencapsulated in the nanostructured ZnO shell.

The attached figures represents:

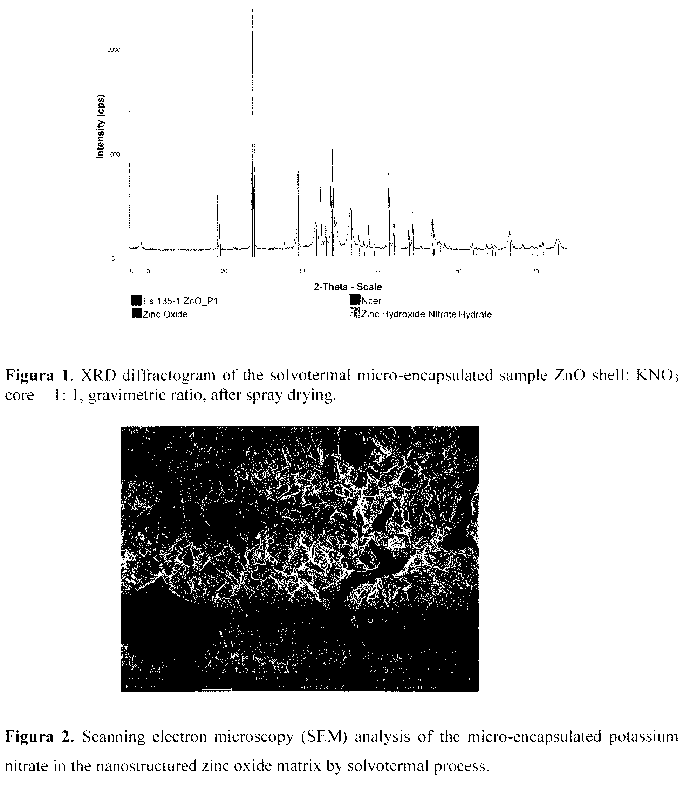

Figure 1 presents the XRD diffractogram of the solvotermal micro-encapsulated sample ZnO shell: KNO₃ core = 1: 1, gravimetric ratio, after spray drying.
Figure 2 presents the scanning electron microscopy (SEM) analysis of the micro-encapsulated potassium nitrate in the nanostructured zinc oxide matrix by solvotermal process.

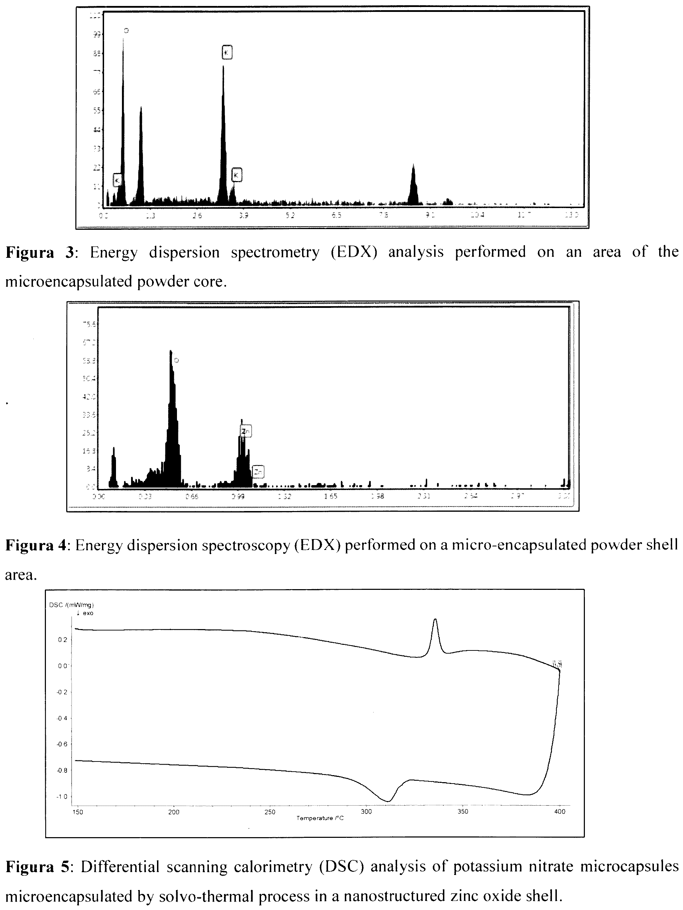

Figure 3 presents energy dispersion spectrometry (EDX) analysis performed on an area of the microencapsulated powder core.
Figure 4 presents energy dispersion spectroscopy (EDX) performed on a micro-encapsulated powder shell area.
Figure 5 presents differential scanning calorimetry (DSC) analysis of potassium nitrate microcapsules microencapsulated by solvotermal process in a nanostructured zinc oxide shell.

An embodiment of the invention will now be described without limiting the use of the same technique in the proposed technical field.

### Example 1

32.10 g of zinc nitrate powder hydrated with 4 water molecules of analytical purity (ZnNO₃) ₂ ^{∗} 4H₂O was dissolved under mechanical stirring in a cylindrical glass vessel in 700 ml of 99% ethanol. In the solution containing the obtained Zn (II) ions were added 5 g KNO₃ potassium nitrate powder of analytical purity. Subsequently, 50 ml of 3M sodium hydroxide solution was added under agitation conditions in order to reach an alkaline pH of about 9.0 so that the zinc ions in the solution precipitate on the dispersed powder of KNO₃. The as obtained suspension was introduced into the autoclave vessel and treated for 2 hours at 200 °C under an argon pressure of 40 atm. After process, the solvo-thermal treated suspension was spray-dried by means of a spray drying equipment, the suspension was introduced through a 2.5 mm diameter nozzle and the air temperature in the spray chamber was 200 °C. The collected powder was particle size classified on a vibrating screening system, separating the powders with a grain size of 20 and 50µm).

X-ray powder diffraction characterization of the dry powder reveals the presence of the initial phase of KNO₃ dispersed material and the formation of the crystalline ZnO phases as the newly formed crystalline phase and also the hydroxy-zinc hydrate as the minor phase.

Scanning electron microscopy (SEM) morphology analysis, accompanied by energy dispersion spectrometry analysis (EDX), highlights micro-encapsulated powders consisting of a KNO₃ crystals core on which transparent ZnO flat crystals were deposited.

The DSC spectra of a heating and cooling cycle for a sample, highlights the occurrence of the endotherm peak corresponding to the melting and the exotherm peak corresponding to the potassium nitrate melting, the melt and solidification temperatures and enthalpy values are shown in Table 2, highlighting the capacity of phase change materials based on potassium nitrate micro encapsulated in the nanostructured zinc oxide shell obtained by the proposed thermal energy storage process at temperatures above 300 °C.

### References:

1. A. Gil, M. Medrano, I. Martorell, A. Lázaro, P. Dolado, B. Zalba, L. F. Cabeza. State of the art on high temperature thermal energy storage for power generation. Part 1-Concepts, materials and modellization. Renewable and Sustainable Energy Reviews 14 (2010) 31-55
2. M. Medrano, A. Gil, I. Martorell, X. Potau, L.F. Cabeza. State of the art on high-temperature thermal energy storage for power generation. Part 2-Case studies. Renewable and Sustainable Energy Reviews 14 (2010) 56-72.
3. M. Liu, W. Saman, F. Bruno. Review on storage materials and thermal performance enhancement techniques for high temperature phase change thermal storage systems. Renewable and Sustainable Energy Reviews 16 (2012) 2118-2132.
4. Zalba B, Marin JM, Cabeza LF, Mehling H. Review on thermal energy storage with phase change: materials, heat transfer analysis and applications. Applied Thermal Engineering 23 (2003) 251-283.
5. S. Kuravi, J. Trahan, D. Yogi Goswami, M.M. Rahman, E.K. Stefanakos. Review. Thermal. energy storage technologies and systems for concentrating solar power Plants. Progress in Energy and Combustion Science 39 (2013) 285-319
6. M.M. Kenisarin. High-temperature phase change materials for thermal energy storage. Renewable and Sustainable Energy Reviews 14 (2010) 955-970.
7. M. Graham, E. Shchukina, P. Felix De Castro, D. Shchukin. Nanocapsules containing salt hydrate phase change materials for thermal energy storage. J. Mater. Chem. A, 4 (2016) 16906-16912.
8. D. Platte, U. Helbig, R. Houbertz, G. Sextl, Macromol. Mater. Eng. 298 (2013) 67-77
9. A. Schoth, K. Landfester, R. Muñoz-Espi, Langmuir 31 (2015) 3784-3788
10. F. Salaun, E. Devaux, S. Bourbigot, P. Rumeau, Carbohydr. Polym. 79 (2010) 964-974
11. EP 2 119 498 A1. Procedure for microencapsulation of phase change materials by spray-drying
12. US 2017/0030077. Microencapsulation of Materials using Cenospheres
13. US 2012/0055661. High Temperature Thermal Energy Storage System
14. US 2012/0055661. High Temperature Thermal Energy Storage System
15. US 2015/0284616. Encapsulation of Thermal Energy Storage Media
16. US 9650556 B2 Encapsulation of high temperature molten salts

**Table 1. Phase analysis by X-ray diffraction of solvo-thermal micro-encapsulated KNO₃ samples in a ZnO shell, after spray drying, with a gravimetric ratio shell : PCM material 2: 1.**

| **Identified phases** | **% gr.** | **Mean cristallite size (nm)** |
|---|---|---|
| KNO₃ | 56,1 | 103 |
| ZnO | 40,3 | 37 |
| Zn₅(OH)₈(NO₃)₂(H₂O)₂ | 3.6 | |

**Table 2. Melting and solidifying temperatures and melting and solidifying enthalpies of initially and microencapsulated KNO₃ in the nanostructured ZnO shell.**

| Sample | Tₜ (°C) | ΔHₜ (J/g) | Tₛ (°C) | ΔHₛ (J/g) |
|---|---|---|---|---|
| KNO₃ microecapsulated in ZnO shell | 335,8 | 38.62 | 311 | 47.97 |

## Claims

1. Microencapsulation process of inorganic phase change materials based on potassium nitrate in an inorganic nanostructured zinc oxide shell having a gravimetric ratio between ZnO shell and KNO3 encapsulated material of between 1:1 and 5:1, preferably 1:1 to 2:1, with applications for thermal energy storage at temperatures above 300 °C'; this process is **characterized by** the fact that the nanostructured zinc oxide shell is precipitated in-situ with potassium hydroxide on the potassium nitrate particles which are dispersed in the alcohol solution of zinc nitrate at 9.0 pH., followed by solvo-thermal treatment in an autoclave for 2 hours at 200 °C and 4.053 MPa (40 atm.) argon pressure, followed by spray-drying process of the suspensions at an air temperature of about 200 °C inside the spraying equipment to obtain grain sizes in the range of 25-50 µm.

## Patentansprüche

1. Mikroverkapselungsprozess anorganischer Phasenwechselmaterialien auf der Basis von Kaliumnitrat, in einer anorganischen nanostrukturierten Zinkoxidschale, mit einem gravimetrischen Verhältnis zwischen ZnO-Schale und KNO₃ eingekapseltem Material zwischen 1:1 und 5:1, vorzugsweise 1:1 bis 2:1, für Anwendungen zur Speicherung thermischer Energie bei Temperaturen über 300°C. Dieser Prozess ist **dadurch gekennzeichnet, dass** die nanostrukturierte Zinkoxidhülle in situ mit Kaliumhydroxid auf den Kaliumnitratpartikeln ausfällt, die in der Alkohollösung von Zinknitrat bei 9,0 pH verteilt sind; es folgt eine solvo-thermische Behandlung in einem Autoklav für 2 Stunden bei 200°C und 40 atm Argondruck, gefolgt von einem Sprühtrocknungsprozess der Suspensionen bei einer Lufttemperatur von etwa 200°C innerhalb der Sprühvorrichtung und einer Körnung im Bereich von 20 bis 50 µm.

## Revendications

1. Le procédé de microencapsulation des matériaux inorganiques à changement de phase à base de nitrate de potassium dans une enveloppe d'oxyde de zinc nanostructurée inorganique montrant un rapport gravimétrique entre l'enveloppe ZnO et le matériau encapsulé KNO3 compris entre 1:1 et 5:1, de préférence entre 1:1 et 2:1, ayant des applications pour le stockage d'énergie thermique aux températures supérieures à 300 ° C ; ce procédé est **caractérisé par le fait que** l'enveloppe d'oxyde de zinc nanostructurée est précipitée in-situ à l'aide d'hydroxyde de potassium sur des particules de nitrate de potassium qui sont dispersées dans la solution alcoolique de nitrate de zinc avec un pH de 9,0, suivi par le traitement solvothermal dans un autoclave pendant 2 heures à 200°C et sous une pression d'argon de 40 atm, suivi par le procédé de séchage par atomisation des suspensions à une température ambiante d'environ 200°C dans l'intérieur de l'équipement de pulvérisation et la détermination de la taille de granulés dans la plage de 20-50 µm.
